Europäisches Patentamt

European Patent Office

Office européen des brevets

(11) Veröffentlichungsnummer: **0 439 020 A1**

## (12) EUROPÄISCHE PATENTANMELDUNG

(21) Anmeldenummer: **91100225.1**

(22) Anmeldetag: **09.01.91**

(51) Int. Cl.5: **G01N 27/16**

(30) Priorität: **16.01.90 DE 4001048**

(43) Veröffentlichungstag der Anmeldung:
**31.07.91 Patentblatt 91/31**

(84) Benannte Vertragsstaaten:
**DE GB**

(71) Anmelder: **Drägerwerk Aktiengesellschaft**
**Moislinger Allee 53-55**
**W-2400 Lübeck 1(DE)**

(72) Erfinder: **Kauschke, Dr., rer.nat.**
**Lindenstrasse 17**
**W-2400 Lübeck(DE)**
Erfinder: **Vehrens, Peter**
**In der Ecke 3a**
**W-2061 Sülfeld(DE)**

(54) **Sensor für die Gasmessung mit einem Katalysatorfühlerelement.**

(57) Ein Sensor zur Bestimmung einer Gaskomponente in Luft mit einem Fühlerelement, dessen elektrisches Widerstandsverhalten durch die Anwesenheit der Gaskomponente veränderbar ist, und der sich an dem freien Ende eines einseitig eingespannten stabförmigen Trägers befindet, auf den eine Heizvorrichtung zur Beheizung des Fühlerelementes aufgebracht ist, soll derart verbessert werden, daß die mechanische Beständigkeit während der Herstellung und während des Betriebes erhöht und die Signalempfindlichkeit verbessert wird. Dazu ist vorgesehen, daß die Heizvorrichtung (8, 8') um den Endbereich (2) des Stabes (3) und dort die Staboberfläche annähernd vollständig abdeckend aufgebracht und mit dem in angenäherter Kugelgestalt ausgebildeten Fühlerelement (1) bedeckt ist.

Fig. 1

EP 0 439 020 A1

## SENSOR FÜR DIE GASMESSUNG MIT EINEM KATALYSATORFÜHLERELEMENT

Die Erfindung betrifft einen Sensor zur Bestimmung einer Gaskomponente in Luft mit einem Fühlerelement, dessen elektrisches Widerstandsverhalten durch die Anwesenheit der Gaskomponente veränderbar ist, und der auf einem einseitig an einem Sockel befestigten stabförmigen, thermisch und elektrisch isolierenden Träger aufgebracht ist und sich auf dem dem Sockel abgewandten, mit einer Heizvorrichtung versehenen Endbereich des Stabes befindet, wobei die Heizvorrichtung mit einer kaltleitenden elektrischen Leiterführung zu einem elektrischen Anschlußstück des Sockels geführt ist.

Derartige Sensoren werden zum Nachweis von Gasen in Luft oder in künstlichen Atmosphären verwendet und benutzen dabei entweder die katalytische Verbrennung einer brennbaren nachzuweisenden Gaskomponente bei erhöhten Temperaturen mittels eines auch als Pellistor bekannten Fühlerelementes, oder es wird bei Vorhandensein der nachzuweisenden Gaskomponente die veränderliche Wärmeleitfähigkeit des erhitzten Fühlerelementes gemessen. Sowohl die katalytischen Wärmetönungsfühler als auch die Wärmeleitfähigkeitsfühler verändern unter Anwesenheit der nachzuweisenden Gaskomponente ihr Widerstandsverhalten für den sie durchfließenden Strom, durch den die Fühler auf eine vorgegebene Temperatur gehalten werden. Ein Wärmeleitfähigkeitssensor kann entweder alleine als Meßfühler oder in einer Brückenschaltung in Kombination mit einem Wärmetönungsmesser als Kompensator eingesetzt werden.

Aus der US-A 4 421 720 ist ein Sensor der genannten Art bekannt, bei welchem ein stabförmiger Träger aus Keramik einseitig in einem Sockel aufgenommen ist und an seinem zungenförmigen Stabende eine Heizvorrichtung in Form von mäanderförmig gewundenen elektrischen Leiterbahnen besitzt. Die Heizungsbahnen sind mit einer Schutzschicht versehen, über welche die den Katalysator enthaltende Sensorschicht gelegt ist.

Der bekannte Sensor arbeitet nach dem Prinzip der Wärmetönungsmessung. Bedingt durch den schichtförmigen Aufbau sowohl der Heizvorrichtung als auch der darüberliegenden Schutz- und Katalysatorschicht leidet die Haftung der Schichten untereinander und auf dem Träger selbst in Folge der schon bei der Herstellung auftretenden hohen Temperaturen (Sinterung der Katalysatorschicht) aber auch fortwährend im Laufe einer Messung durch die dabei entstehenden Temperaturschwankungen. Diese Schädigung geht hin bis zur Ablösung einzelner Schichtbereiche oder sogar der ganzen Schichten. Während des Betriebs derartiger bekannter Sensoren bei mehreren 100° Celsius Betriebstemperatur tritt eine vorzeitige Alterung der Sensoren auf, welche durch Rißbildung in den Schichten in Folge ungleichmäßiger Temperaturverteilung entstehen und sich ebenfalls bis hin zum Ablösen ganzer Schichtbereiche bemerkbar machen. Die einseitige Aufbringung der Heizvorrichtung auf den Träger belastet diesen während des Betriebs wegen der ungleichmäßigen Temperaturverteilung zwischen Vorder- und Rückseite des thermisch gut isolierenden Trägers.

Derjenige Widerstandsbereich, welcher von dem Fühlerelement bedeckt ist, (der sogenannte Warmleiterbereich) ist deutlich größer als der Widerstandsbereich der Heizvorrichtung, welcher nicht an dem Nachweis des brennbaren Gases teilnimmt, der sogenannte Kaltleiterbereich. Das Verhältnis von beheiztem Widerstandsbereich und kalter Leiterführung als Verbindung zwischen den Anschlußstücken und der Heizvorrichtung muß also möglichst groß sein, damit die Heizleistung im Warmleiterbereich konzentriert ist. Dieses Verhältnis ist bei dem bekannten Sensor nicht günstig.

Der Erfindung liegt somit die Aufgabe zugrunde, einen Sensor der eingangs genannten Art so zu verbessern, daß seine mechanische Beständigkeit sowohl während seiner Herstellung als auch während des Betrieb erhöht und die Signalempfindlichkeit verbessert wird.

Die Lösung der Aufgabe erfolgt dadurch, daß die Heizvorrichtung um den Endbereich des Stabes und dort die Staboberfläche annähernd vollständig abdeckend aufgebracht ist und mit dem in angenäherter Kugelgestalt ausgebildeten Kühlerelement bedeckt ist.

Der Vorteil der Erfindung liegt im wesentlichen darin, daß durch die flächendeckend, den Endbereich fast vollständig umfassend aufgebrachte Heizvorrichtung dieser gleichmäßig beheizt wird und für eine homogene Wärmeverteilung innerhalb des kugelförmig ausgebildeten Fühlerelementes gesorgt ist. Dadurch wird eine Rißbildung vermieden, für die sonst insbesondere während des Sinterprozesses des Fühlerelementes und auch während länger andauernder Betriebszustände bei höheren Temperaturen diese Gefahr bestünde. Die als elektrische Widerstandsstrecke ausgebildete Heizvorrichtung ist wegen der allseitigen Aufbringung auf dem Stab als empfindliches Signalelement ausgebildet, da die Zuführungsleitungen als kaltleitende Leiterführungen wegen ihres geringfügigen Beitrags zum Gesamtwiderstand der Heizvorrichtung das Meßsignal nur unbedeutend beeinflussen. Das Verhältnis zwischen signalbildender Widerstandsstrecke in der Heizvorrichtung zur betriebsnotwendigen Widerstandsstrecke der kalten Leiterführungen ist groß genug, so daß das Meßsignal im wesentlichen auf die Widerstandsveränderung der vom Fühlerelement umschlossenen Heizleiterbahn bestimmt wird. Die Heizleistung wird auf den Warmleiterbereich, gebildet durch die Heizleiterbahn, konzentriert. Der Kaltleiterbereich, gebildet durch die Zuführungs- und Abführungsleitungen, ist demgegenüber vernachlässigbar für eine Auswirkung auf den Meßwert.

Die Aufbringung des Fühlerelementes kann auf einfache Weise durch Aufstreichen oder Pipettieren einer Aufschlämmung aus einer Oxidkeramik mit einer evtl. gewünschten Beimischung eines geeigneten Katalysatorbestandteiles auf den Stab durchgeführt werden, wobei die gewünschte kugelförmige Gestalt einen festen Halt schon der mehr oder weniger plastischen Aufschlämmung ermöglicht. Andere Aufbringungsmöglichkeiten bestehen durch Tauchen in eine Aufschlämmung, durch Pipettieren und Tauchen aus Lösungen. Bei nachfolgender Austrocknung bzw. Sinterung führt eine Schrumpfung infolge der Austrocknung des Fühlerelementes nicht zu Rißbildungen, sondern zu einer konzentrischen isotonischen Kontraktion, welche das Fühlerelement in seinem Gefüge für die nachfolgende Meßaufgabe nur unmerklich stört. Das Material des Fühlerelementes besitzt erforderlichenfalls als Katalysatoranteil Platin oder Rhodium oder andere Edelmetalle, feinstverteilt auf dem Sintermetalloxid. Mit einem einen Katalysator enthaltenden Fühlerelement lassen sich vorzugsweise brennbare Gase mit Hilfe der Wärmetönungsmessung nachweisen. Durch die katalytische Verbrennung der Gase an der Oberfläche wird die Temperatur des Fühlerelementes erhöht, wodurch sich der Widerstandswert der vom Fühlerelement umschlossenen Heizvorrichtung verändert. Diese Veränderung ist als Meßsignal über eine Brückenschaltung nachweisbar. Die gleiche Anordnung des Sensors, wobei jedoch das Fühlerelement keinen Katalysator enthält, ist für die Vergleichsmessung als Kompensationselement innerhalb der genannten Brückenschaltung verwendbar oder für die Durchführung einer bloßen Wärmeleitfähigkeitsmessung in Gasen einsetzbar.

Der als Träger vorgesehene Stab besteht vorzugsweise aus einer Silizium-, Aluminium- oder Zirkonoxidkeramik von einer Dicke zwischen 50 Mikrometern und einem Millimeter, wobei das Querschnittsverhältnis bei einem rechteckigen Stab zwischen Höhe und Breite zwischen 1:1 und 1:10 liegt. Es können gleicherweise auch Glasfasern mit einem Durchmesser von 10 Mikrometern bis 1 mm, typischerweise zwischen 50 und 100 Mikrometern gewählt werden. Der Träger kann ein mykrostrukturiertes Halbleitermaterial mit einer elektrischen Isolierschicht versehen, z. B. Silizium mit einer Siliziumdioxidschicht, wobei die Widerstandsheizung aus elektrisch leitendem Material wie Platin oder Platinlegierungen wie Platinrhodium und Platiniridium in Bandform aufgetragen sein (z.B. durch Sputtern). Andere Trägeraufbauten sind aus Metall mit einem isolierenden Überzug, als Whisker oder aus Glas bzw. Quarz denkbar. Über den Leiterbahnen der Heizvorrichtung ist zur Vermeidung von katalytischen Reaktionen an ihnen oder zum Schutz vor elektrischen Kurzschlüssen eine abdeckende elektrischisolierende Passivierungsschicht aus Aluminiumoxid, Siliziumoxid oder Tantaloxid, aufgetragen. Die kaltleitenden elektrischen Leiterführungen sind aus Material von geringem Widerstand, wie z.B. Gold, hergestellt.

Der geeignete Ort für die Aufbringung der Heizvorrichtung und des sie umschließenden Fühlerelementes befindet sich möglichst nahe am Stabende, dem Sockel gegenüberliegend, so daß das kugelförmige Fühlerelement in annähernd einem Abstand seines Durchmessers von der Stabspitze entfernt positioniert ist. Zweckmäßigerweise ist es auf der Spitze selbst wie ein Streichholzkopf aufgebracht. Durch diese Anordnung ist ein günstiger Wärmehaushalt sichergestellt, und sie kann am besten dadurch verwirklicht werden, indem das Fühlerelement durch ein- oder mehrmaliges Tauchen in eine geeignete Aufschlämmung auf die Trägerspitze aufgebracht wird.

Eine besonders geeignete Form zur Gestaltung der Heizvorrichtung ist darin zu sehen, daß sie als elektrische Widerstandsleiterbahn in Form einer Doppelhelix um den Stab gewickelt ist. Dabei ist eine erste Wicklung vom Sockel ausgehend in Aufwärtslage bis zur Stabspitze hin gewickelt, führt dort einen Umkehrweg aus, so daß die weitere Bahnführung in einer Abwärtslage zwischen die schon gewickelten Bindungen der Aufwärtslage zurückgeführt wird. Auf diese Weise ist eine beheizte Zone durch die Heizvorrichtung vorgegeben, die bis hin zum Ende des Stabes an seine Spitze geführt werden kann. Dadurch ist es besonders gut möglich, kugelförmige Fühlerelemente am Ende des Trägers aufzubringen. Die Herstellung einer solchen Doppelhelixwicklung erfolgt am besten dadurch, daß ein abgerundeter, stabförmiger Träger hinter einer Maske rotiert wird, welche eine Durchtrittsöffnung von der Größe etwa des Radius des Stabes aufweist und den Stab im übrigen abschattet, wobei die Leiterbahn durch Sputtern auf dem sich drehenden und sich axial gleichzeitig verschiebenden Träger aufgebracht wird.

In weiterer Ausgestaltung der Erfindung kann der Träger als ein im wesentlichen rechteckiger Stab ausgebildet sein, wobei die Heizvorrichtung auf sich gegenüberliegenden Flächenabschnitten des Stabes aufgebracht ist. Beide Flächen, auf denen sich die Heizvorrichtung befindet, sind an der Spitze des Stabes über einen eventuell galvanisch verstärkten Verbindungsleiter gekoppelt und mit jeweils einer kalten Zuführungsleitung und Rückführungsleitung elektrisch mit dem Sockel verbunden.

Die Querschnittsfläche des Stabes liegt zweckmäßigerweise im Bereich von 25 Mikrometer im Quadrat bis 0,25 mm im Quadrat. Die Heizvorrichtung selbst ist dabei in Dünn- oder Dickschichttechnik aufgetragen. Auf diese Weise erhält man eine räumlich kleine Ausdehnung des Trägers und der Heizvorrichtung zugunsten einer größeren, meßwirksamen Ausdehnung des kugelförmigen Fühlerelementes. Eine weitere Erniedrigung des Wärmeabflusses aus dem Fühlerelement längs des Stabes in Richtung des Sockels und eine Erhöhung der mechanischen Stabilität erreicht man dadurch, daß der Stab als ein Rohr ausgebildet wird. Dieses erhält man z.B. dadurch, daß auf einem dünnen Wachsfaden eine Leitschicht aufgebracht wird, auf der eine etwa 20 Mikrometer dicke Schicht Nickel chemisch abgeschieden wird. Nach Anwendung eines Lösemittels wird das Wachs entfernt und es bleibt ein dünnes Nickel-Rohr zurück. Derartige Hohlkörper sind kommerziell beispielsweise von der Firma Servometer Corp., Cedar Grove, NJ, USA, erhältlich.

Eine andere Möglichkeit, den Wärmeabfluß zu verringern und gleichzeitig eine mechanisch stabile Ausführungsform für den Träger zu erhalten, besteht darin, daß z.B. ein durch Mikrostrukturierung gewonnenes Doppel-T-förmiges Silizium-Profilstück verwendet wird.

Um den Beitrag der kaltleitenden Leiterführungen zum Gesamtwiderstand möglichst gering zu halten, sind diese aus einem Material hoher elektrischer Leitfähigkeit und niedrigem Temperaturkoeffizienten, und die Heizvorrichtung aus Material geringer elektrischer Leitfähigkeit und hohem Temperaturkoeffizienten gebildet.

Um die Leiterführung im Bereich der Spitze des Stabes möglichst einfach zu gestalten, und um eine in sich geschlossene Bahnführung zu ermöglichen, die nicht durch Rißbildung an Ecken oder Kanten gestört ist, ist es von Vorteil, daß ein in sich geschlossener elektrisch leitender Belag die Spitze des Stabes hutförmig abdeckt, so daß dieser Belag als Umkehrweg bzw. Verbindungsleiterbahn für die Bahnführung der Heizvorrichtung dienen kann. Somit können die Heizleiterbahnen auf einfache Weise auf den schon vorher aufgebrachten, evtl. noch galvanisch verstärktem Belag, kontaktiert werden. Die gerade an der Spitze des Stabes aufwendige und komplizierte Leiterbahnführung wird so vereinfacht.

Der Träger mit seinem Abschlußstück ist günstigerweise auf einen Sockel aus einer Keramik aufgebracht, welche die für die Signalaufbereitung notwendigen elektrischen Schaltkreise, wie z.B.

Vorverstärker, Anpassungs- oder Brückenschaltungen in Siliziumtechnik oder in Dick- bzw. Dünnschichttechnik enthält. Andererseits kann der Sockel einfach aus Epoxy geformt sein, der die notwendigen elektrischen Kontakte und auch die Verstärkungsschaltung auf einer bedruckten Folie trägt.

Träger und Fühlerelemt werden zu einem Sensor beispielsweise derart vereinigt, daß zunächst mehrere Träger in einem Batch-Verfahren hergestellt, beidseitig strukturiert und beschichtet und anschließend durch Sägen oder Laser-Schneiden vereinzelt werden. Anschließend werden die Spitzen der Träger in eine Aufschlämmung einer Oxidkeramik getaucht.

Ein Ausführungsbeispiel der Erfindung wird im folgenden näher erläutert und anhand einer schematischen Darstellung gezeigt:

Fig. 1    Die Darstellung des Sensors mit aufgeschnittenem Fühlerelement

Fig. 2    Die Spitze des stabförmigen Trägers mit einer aufgewickelten Heizungsvorrichtung

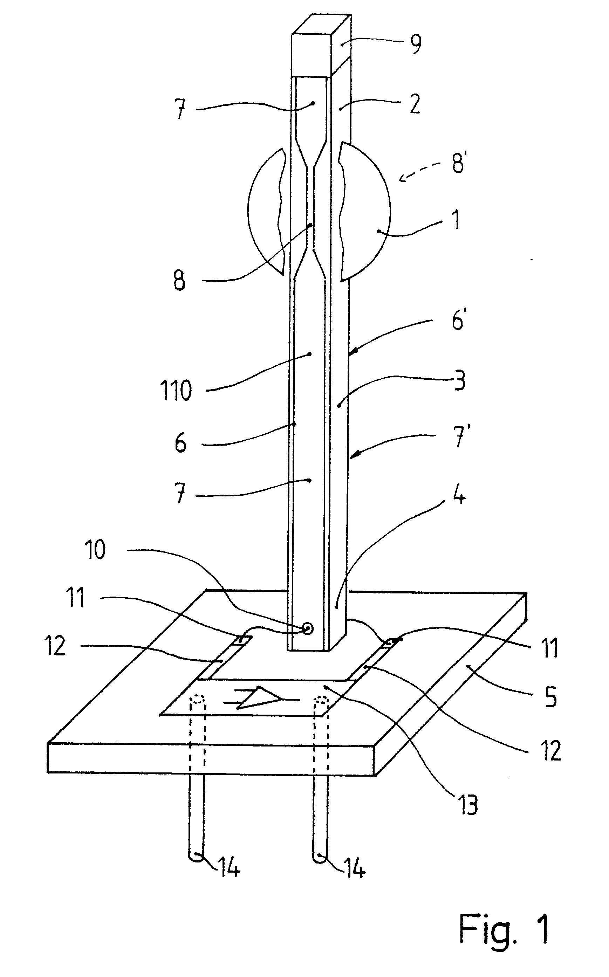

In Fig. 1 ist der Sensor dargestellt, welcher ein Fühlerelement (1) am Endbereich (2) eines stabförmigen Trägers (3) trägt. Der Träger (3) ist mit seinem Fuß (4) in einem Sockel (5) aufgenommen und mit ihm fest verbunden. Auf je sich zwei gegenüberliegenden Seitenflächen des rechteckigen Trägers (3) befinden sich elektrische Leiterbahnen (6), von denen lediglich die eine sichtbar und dargestellt ist. Die Leiterbahn (6) setzt sich zusammen aus einer kaltleitenden elektrischen Leiterführung (7) von großem Leitungsquerschnitt und einer heißleitenden Leiterbahn als Heizvorrichtung (8) von geringem Leitungsquerschnitt. An die Heizvorrichtung (8) schließt sich zum Endbereich (2) des Trägers (3) in eine wiederum kaltleitende Leiterführung (7) an. Die vorderseitige sichtbare Leiterbahn (6) ist mit der rückwärtigen nicht dargestellten Leiterbahn (6') an den jeweiligen kaltleitenden Leiterbahnen (7) im Endbereich (2) elektrisch durch einen leitfähigen Überzug (9) verbunden, welcher hutförmig über die Spitze des Endbereichs (2) gelegt ist. Die kaltleitenden Leiterbahnen (7) im Endbereich (2) sind mit dem Überzug (9) elektrisch kontaktiert. Das Fühlerelement (1) ist in kugelförmiger Gestalt derart um den Endbereich (2) des Trägers (3) gelegt, daß es die Heizvorrichtung (8) an ihrer Leiterbahn mit verdünntem Querschnitt vollständig überdeckt. Dabei besitzt nicht nur die Leiterbahn (6) eine Heizvorrichtung (8), sondern auch die nicht dargestellte Leiterbahn (6') auf der rückwärtigen Seitenfläche des Trägers (3) besitzt in gleicher Höhe zur Heizvorrichtung (8) eine verdünnte heißleitende Leiterbahn (8'). Beide Heizvorrichtungen (8, 8') sind mit einer Abdeckschicht (110) überzogen. Am Fuß (4) des Trägers (3) sind die kaltleitenden Leiterbahnen (7, 7') mit Punktkontakten (10, 11) an die Oberfläche des Sockels (5) elektrisch angeschlossen, von wo aus Signalleitungen (12) zu einer Verstärkerschaltung (13) weitergeführt sind, welche in Dickschichttechnik den Signalvorverstärker und Abgleichschaltungen enthält. Von der Verstärkerschaltung (13) aus sind Kontaktstifte (14) durch den Sockel (5) geführt, die in Verbindung mit einem nicht dargestellten Auswerte- und Anzeigegerät gebracht sind.

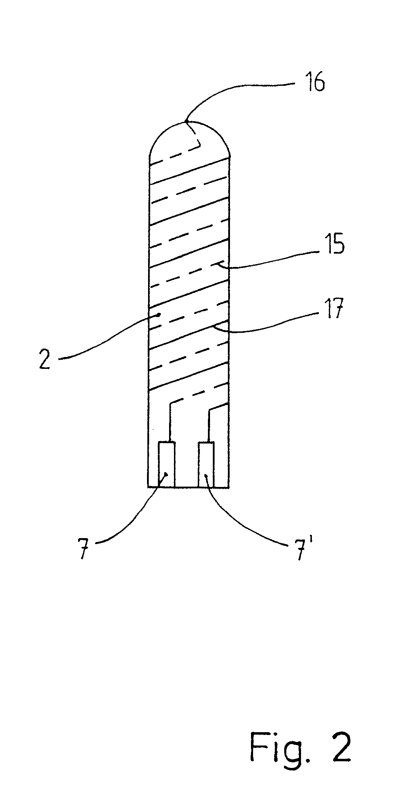

In Fig. 2 ist als Einzelteil lediglich eine weitere Ausführungsform des Endbereichs (2) eines Trägers (3) dargestellt, um den die heißleitende Leiterbahn als Heizvorrichtung in Form einer Doppelhelix gewickelt ist. Von der einen kaltleitenden Leiterbahn (7) geht eine Aufwärtslage (15) aus und ist bis zur Spitze des Endbereichs (2) gewickelt, wo sie über der Spitze in Form eines Umkehrweges (16) geführt ist und auf der Rückseite des Endbereichs in einer Abwärtslage (17) zwischen den Linienführungen der Aufwärtslage (15) zu der zweiten kaltleitenden Leiterbahn (7') zurückgeführt ist.

**Patentansprüche**

1. Sensor zur Bestimmung einer Gaskomponente in Luft mit einem Fühlerelement, dessen elektrisches Widerstandsverhalten durch die Anwesenheit der Gaskomponente veränderbar ist, und der auf einem einseitig an einem Sockel befestigten stabförmigen, thermisch und elektrisch isolierenden Träger aufgebracht ist und sich auf dem dem Sockel abgewandten, mit einer Heizvorrichtung versehenen Endbereich des Stabes befindet, wobei die Heizvorrichtung mit einer kaltleitenden elektrischen Leiterführung zu einem elektrischen Anschlußstück des Sockels geführt ist, dadurch gekennzeichnet, daß die Heizvorrichtung (8) um den Endbereich (2) des Stabes (3) und dort die Staboberfläche annähernd vollständig abdeckend aufgebracht ist und mit dem in angenäherter Kugelgestalt ausgebildeten Fühlerelement (1) bedeckt ist.

2. Sensor nach Anspruch 1, dadurch gekennzeichnet, daß das Fühlerelement (1) einen die bei erhöhten Temperaturen stattfindende Verbrennung einer brennbaren Gaskomponente fördernden Katalysator enthält.

3. Sensor nach Anspruch 1 oder 2, dadurch gekennzeichnet, daß die Heizvorrichtung in Form einer Bahnführung (8) derart um den Träger (3) gelegt ist, daß er in einer Aufwärtslage (15) um den Endbereich (2) gewunden ist und sich bis zur Spitze erstreckt, an der Spitze einen Umkehrweg (16) ausführt und in einer Abwärtslage (17) zurückgewunden ist in der Weise, daß beide Lagen (15, 17) in Form einer Doppelhelix nebeneinander liegen.

4. Sensor nach einem der Ansprüche 1 bis 3, dadurch gekennzeichnet, daß die Heizvorrichtung (8, 8') durch eine gasdichte Abdeckschicht (110) passiviert ist.

5. Sensor nach Anspruch 1, dadurch gekennzeichnet, daß der Stab (3) einen im wesentlichen rechteckigen Querschnitt besitzt, wodurch zumindest im Teilbereich für die Heizvorrichtung (8) sich gegenüberliegende Stabflächen gebildet sind, auf welchen jeweils eine Heizfläche (8, 8') aufgebracht ist, die an der Stabspitze mit einer kurzen Verbindungsleiterbahn (9) gekoppelt sind und die mit insgesamt einer kalten Zuführungsleitung (7) und einer kalten Rückführungsleitung (7') elektrisch mit dem Sockel (5) verbunden sind.

6. Sensor nach einem der Ansprüche 1 bis 5, dadurch gekennzeichnet, daß der Stab (3) eine Querschnittsfläche im Bereich von 25 Mikrometer im Quadrat bis 0,25 mm im Quadrat aufweist, auf den die Heizvorrichtung (8, 8') in Dünn- oder Dickschichttechnik aufgetragen ist.

7. Sensor nach einem der Ansprüche 1 bis 6, dadurch gekennzeichnet, daß die kaltleitenden Leiterführungen (7, 7') und die Heizvorrichtungen (8, 8') aus Material unterschiedlicher elektrischer Leitfähigkeit und/ oder unterschiedlicher Temperaturkoeffizienten bestehen.

8. Sensor nach einem der Ansprüche 1 oder 5 bis 7, dadurch gekennzeichnet, daß die Spitze des Stabes (3) in seinem Endbereich (2) mit einem leitfähigen Belag (9) hutförmig überzogen ist, an den die Leiterbahn (7, 7') elektrisch kontaktiert ist.

**Fig. 1**

Fig. 2

## Europäisches Patentamt

# EUROPÄISCHER RECHERCHENBERICHT

Nummer der Anmeldung

# EP 91 10 0225

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A,D | US-A-4 421 720   (H. KAMIYA et al.)<br>* Spalte 2, Zeile 49 - Spalte 3, Zeile 55 *<br>— — — | 1,2 | G 01 N<br>27/16 |
| A | DE-A-3 223 656   (TOYOTA JIDOSHA KOGYO K.K.)<br>* Seite 8, Zeile 9 - Seite 11, Zeile 5 *<br>— — — | 1,2 | |
| A | DE-A-3 135 101   (NATIONAL RESEARCH DEV. CORP.)<br>* Zusammenfassung; Seite 7, Zeilen 9-12; Figur 1 *<br>— — — — — | 1 | |

|  |
|---|
| **RECHERCHIERTE SACHGEBIETE (Int. Cl.5)** |
| G 01 N |

Der vorliegende Recherchenbericht wurde für alle Patentansprüche erstellt

| Recherchenort | Abschlußdatum der Recherche | Prüfer |
|---|---|---|
| Berlin | 22 April 91 | BRISON O.P. |